# EUROPEAN PATENT SPECIFICATION

(11) **EP 3 782 738 B1**
(45) Date of publication and mention of the grant of the patent: **12.04.2023**
(21) Application number: 20189540.6
(22) Date of filing: 05.08.2020
(51) Int. Cl.: B06B 3/00, B29C 65/08, B29C 35/16, B29C 65/00

(54) **FORCED COOLING PIEZOELECTRIC TRANSDUCER**
ZWANGSGEKÜHLTER PIEZOELEKTRISCHER WANDLER
TRANSDUCTEUR PIÉZOÉLECTRIQUE À REFROIDISSEMENT FORCÉ

(30) Priority: 22.08.2019 IT 201900014946
(43) Date of publication of application: 24.02.2021
(73) Proprietor: Sonic Italia S.r.l., 20017 Rho (MI) (IT)
(72) Inventor: RUBAGOTTI, Paolo, 20017 Rho (MI) (IT)
(74) Representative: Long, Giorgio

(56) References cited:
- ES-U- 1 068 083
- US-A- 3 555 297
- US-A- 3 694 675

## Description

The present invention relates to a piezoelectric transducer, of the type normally used in sonication devices, with forced cooling, in particular air cooling.

Ultrasonic devices are widely used in many industrial fields, both for cleaning surfaces and for welding or cutting materials, in particular plastics. In the latter case, the ultrasonic generator is coupled to a sonotrode, which has a portion in contact with the material to be welded or treated with a shape adapted to the surface itself and to the type of intervention.

The core of the ultrasonic device is the transducer or "converter", i.e., the device which transforms an electrical signal into a mechanical impulse, in order to produce a vibration with a typical ultrasonic frequency or directly in a fluid medium, for example water, or on the sonotrode. The latter, due to the structural characteristics thereof, amplifies the vibration, in certain cases with the aid of a so-called booster, and transfers it to the vehicle or material to be treated.

The transformation of the electrical signal into mechanical force is obtained in the transducer due to the use of a piezoelectric material, which has the ability to polarize, generating a difference in potential when subjected to mechanical deformation (direct piezoelectricity) and vice versa to deform when subjected to a difference in potential which induces a charge polarization therein (inverse piezoelectricity). This latter property is the one exploited in ultrasonic transducers.

Natural piezoelectric materials exist, such as quartz, tourmaline, LiNbO₃, LiTaO₃, La₃Ga₅SiO₁₄, Li₂B₄O₆ or ZnO, but those most used in transducers are materials in which the polarization is artificially induced, i.e., piezoceramic materials (BaTiO₃, PbTiO₃, PZT = PbZrOs-PbTiOs 1:1, PbNb₂O₆), piezopolymers (vinylidene polyfluoride, trifluoroethylene, tetrafluoroethylene) and ceramic-polymer composites.

A problem related to the use of these ultrasonic devices is the dispersion of energy in the form of thermal energy. This causes the device to overheat so as to make the continuous use thereof impossible, due to the breakage of the ceramic piezoelectric material.

To overcome this problem, transducers with forced air circulation cooling have been created, but this solution, although effective in intermittent use, has proved insufficient for continuous use.

The problem underlying the present invention is therefore that of providing an ultrasonic device, in particular the transducer of said device, which overcomes the drawbacks of the background art and which can therefore be applicable without restrictions even in uses where a continuous operation of the device is required.

Such problem is overcome by an ultrasonic transducer device as defined in the attached claims, the definitions of which form an integral part of the present description.

Prior art documents ES 1 068 083 U and US 3,694,675 A disclose an ultrasonic transducer device which encloses a piezoelectric device, characterized in that the piezoelectric device comprises an internal ventilation path for the passage of cooling air from the outside of the piezoelectric device to the outside of the casing.

Therefore a first object of the invention is an ultrasonic transducer device comprising a casing which encloses a piezoelectric device, in which the piezoelectric device comprises an internal ventilation path for the passage of cooling air from the outside of the piezoelectric device to the outside of the casing as defined in the annexed claims.

A second object of the invention is a sonication apparatus comprising one or more transducer devices according to the invention.

Further features and advantages of the present invention will be more apparent from the description of embodiments, given here below by way of a nonlimiting example, with reference to the following figures:

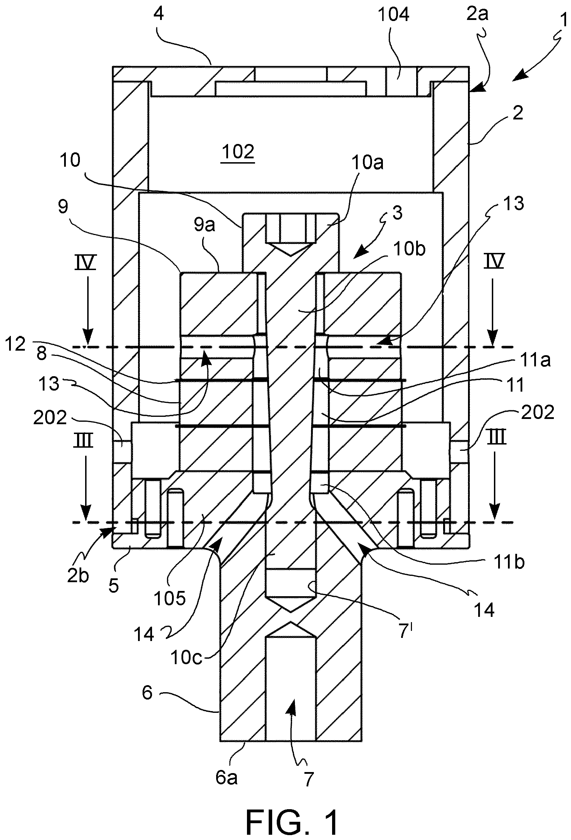

Figure 1 shows a longitudinal sectional view of the transducer of the invention;

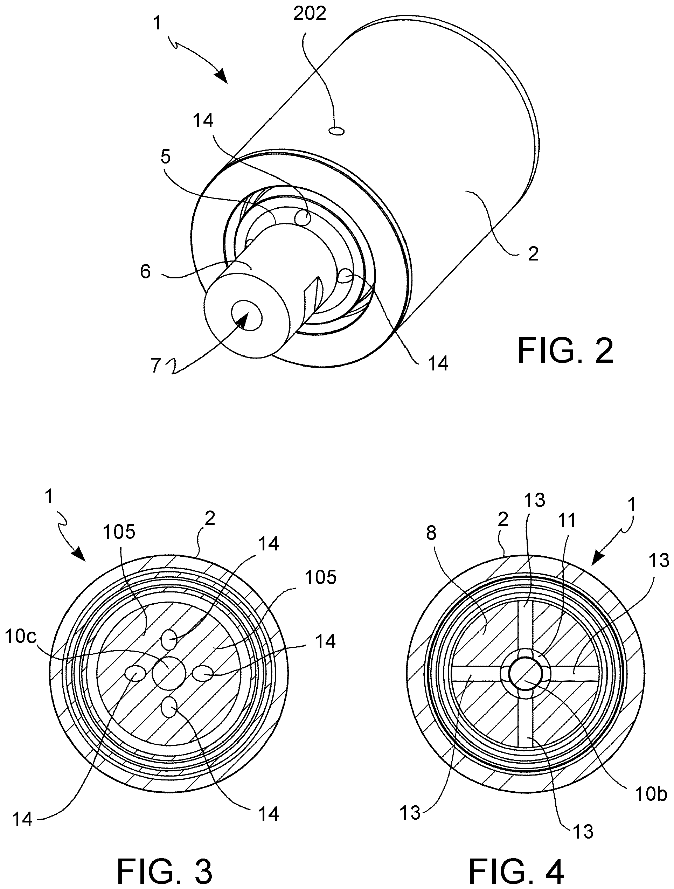

Figure 2 shows a perspective view of the transducer of figure 1;
Figure 3 shows a view according to the section III-III of figure 1;
Figure 4 shows a view according to the section IV-IV of figure 1.

With reference to the figures, the number 1 indicates an ultrasonic transducer device, henceforth simply a transducer, according to the invention. The transducer 1 comprises a casing 2 which encloses a piezoelectric device 3. The casing 2 has a substantially cylindrical shape open at the two ends, i.e., a first end 2a and a second end 2b.

Between the piezoelectric device 3 and the internal walls of the casing 2 a chamber 102 is formed configured so as to allow the passage of a cooling air flow along the external walls of the piezoelectric device 3.

The first end 2a of the casing 2 is closed by a cover 4, while the second end 2b is closed by a connection plate 5.

The cover 4 comprises a hole 104 connectable to a pressurized air source for cooling the piezoelectric device 3.

Close to the second end 2b, the casing 2 comprises one or more holes 202 which put the chamber 102 in communication with the environment outside the transducer 1.

The connection plate 5 comprises a body 105 which extends inside the casing 2 and which has a mass calculated according to the mass-spring-damper model.

A hub 6 centrally extends from the connection plate 5 and protrudes outside the casing 2, for connecting with an operating member (not shown), for example a sonotrode.

To this end, the hub 6 may comprise a first seat 7, typically a threaded hole, open at the external end 6a of the hub 6, for connecting with said operating member. A second seat 7' is placed in the body 105 of the connection plate 5 and, in the embodiment of the drawings, partly in the hub 6, in a position diametrically opposite the first seat 7, i.e., it is open towards the inside of the casing 2. The second seat 7' preferably comprises at least one threaded portion as well.

The casing 2, the cover 4 and the connection plate 5-105 with the hub 6 are normally made of metal, typically aluminum or titanium alloys or steel. The hub 6 is preferably made in one piece with the connection plate 5.

The piezoelectric device 3 comprises a piezoelectric element 8 sandwiched between the body 105 of the plate 5 and a countermass element 9. Both the piezoelectric element 8 and the countermass element 9 are preferably disc-shaped and comprise a central hole aligned with the second seat 7' of the connection plate 5.

The piezoelectric element 8 is preferably made of a piezoceramic material, such as for example BaTiO₃, PbTiO₃, PZT = PbZrOs-PbTiOs 1:1 or PbNb₂O₆, a piezopolymer material, such as for example vinylidene polyfluoride, trifluoroethylene or tetrafluoroethylene or a ceramic-polymer composite material.

A fastening element 10, typically a screw such as for example a screw with a hexagonal head, is inserted in the aligned holes of the countermass element 9 and of the piezoelectric element 8 and fastened by screwing into the second seat 7' of the connection plate 5. In this way, the piezoelectric element 8 is kept in contact both with the countermass element 9 and with the body 105 of the connection plate 5.

The fastening element 10 comprises a head 10a, for example a hexagonal head, a central portion 10b and an end portion 10c.

The head 10a has a larger diameter than that of the central portion 10b, so as to lie on the upper surface 9a of the countermass element 9.

The end portion 10c is threaded and is sized so as to couple by screwing with the second seat 7' of the connection plate 5.

The central portion 10b has a frustoconical shape, tapered towards the end portion 10c, and has a diameter always smaller with respect to the internal diameter of the holes which pass through the countermass element 9, the piezoelectric element 8 and the first part of the body 105 of the connection plate 5. In this manner, a toroidal spacing 11 is formed between the fastening element 10 and the internal walls of the countermass 9 and piezoelectric elements 8, in which said toroidal spacing 11 is greater at the smaller diameter section of the fastening element 10, for which the longitudinal section of the toroidal spacing 11 is flared passing from the countermass element 9 to the body 105 of the connection plate 5.

There is a plate 12 made of metallic material between the piezoelectric element 8 and the countermass element 9, which constitutes a contact element connectible (in a known manner, but not shown in the drawings) with an electrical energy source, so as to transfer the electrical impulses to the piezoelectric element 8, which will then be placed in vibration with the predetermined frequency.

The countermass element 9 comprises a plurality of radial channels 13 (in the embodiment shown in the drawings, four radial channels 13) which put the chamber 102 between the casing 2 and the piezoelectric device 3 in flow communication with the toroidal spacing 11, at the smaller section portion 11a of the latter.

The connection plate 5 in turn comprises a plurality of radial channels 14 which connect the toroidal spacing 11, at the greater section portion 11b thereof, with the environment outside the transducer 1.

Preferably, even the radial channels 14 of the connection plate 5 have a profile flared towards the outside, in continuation of the flaring of the toroidal spacing 11.

In this manner, a lower pressure drop of the air flow is obtained, while preserving the mechanical integrity of the system.

Preferably, the radial channels 14 of the connection plate 5 are arranged obliquely and are substantially aligned with the outlets in the toroidal spacing 11 of the radial channels 13 of the countermass element 9.

In this manner, the cooling air introduced into the chamber 102 of the casing 2 through the hole 104, in addition to externally wrapping the piezoelectric device 3 and partially exiting from one or more holes 202 of the casing 2, penetrates through the radial channels 13 of the countermass element 9, slides in the toroidal spacing 11 and exits through the radial channels 14 of the connection plate 5, thus obtaining an effective internal cooling of the piezoelectric device 3.

The provision of both external and internal cooling to the piezoelectric device 3 allows the temperature of the transducer to be kept generally below 30°C, thus making it possible to use the device continuously.

Clearly only a few particular embodiments of the present invention have been described, so an expert skilled in the art will be able to make all of the necessary changes for the adaptation thereof to particular applications, without thereby departing from the scope of protection of the present invention, as defined in the appended claims.

## Claims

1. An ultrasonic transducer device (1) comprising a casing (2) which encloses a piezoelectric device (3), wherein the piezoelectric device (3) comprises an internal ventilation path (13, 11, 14) for the passage of cooling air from the outside of the piezoelectric device (3) to the outside of the casing (2), wherein the device (1) comprises a connection plate (5) comprising a body (105) which extends inside the casing (2) and which has a mass calculated in accordance with the mass-spring-damper model, a hub (6) centrally extending from the connection plate (5) and protruding outside the casing (2), the hub (6) being configured for the connection with an operating member, for example a sonotrode, wherein the connection plate (5) comprises a seat (7') comprising at least one threaded portion and wherein the piezoelectric device (3) comprises:
- a piezoelectric element (8) sandwiched between the body (105) of the plate (5) and a countermass element (9), wherein the piezoelectric element (8) and the countermass element (9) comprise respective central holes aligned with the seat (7') of the connection plate (5),
- a fastening element (10) inserted in the aligned holes of the countermass element (9) and of the piezoelectric element (8) and fastened into the seat (7') of the connection plate (5) by screwing, and
- a plate (12) made of metallic material, placed between the piezoelectric element (8) and the countermass element (9) so as to form a contact element connectible with an electric power source, the fastening element (10) comprising a head (10a), a central portion (10b) and an end portion (10c), wherein:
- the head (10a) has a diameter greater than the one of the central portion (10b);
- the end portion (10c) is threaded and is sized so as to couple with the seat (7') of the connection plate (5) by screwing;
- the central portion (10b) has a frustoconical shape, tapered towards the end portion (10c), and has a diameter always smaller with respect to the internal diameter of the holes which pass through the countermass element (9), the piezoelectric element (8) and a first part of the body (105) of the connection plate (5), so as to form a toroidal spacing (11) between the fastening element (10) and the internal walls of the countermass (9) and piezoelectric elements (8), wherein said toroidal spacing (11) is flared passing from the countermass element (9) to the body (105) of the connection plate (5) and comprises a section of smaller section (11a) at the countermass element (9) and a section of greater section (11b) at the body (105).

2. A transducer device (1) according to claim 1, wherein between the piezoelectric device (3) and the internal walls of the casing (2) a chamber (102) is formed configured so as to allow the passage of a cooling air flow along the external walls of the piezoelectric device (3).

3. A transducer device (1) according to claim 2, wherein the casing (2) comprises a first end (2a) and a second end (2b), wherein the device (1) comprises, near the first end (2a), a hole (104) connectible to a cooling air source and, near the second end (2b), one or more holes (202) which put the chamber (102) in communication with the outside of the casing (2).

4. A transducer device (1) according to claim 1, wherein:
- the countermass element (9) comprises a plurality of radial channels (13) which put the chamber (102), between the casing (2) and the piezoelectric device (3), in flow communication with the toroidal spacing (11), at the smaller section portion (11a) of the latter, and
- the connection plate (5) comprises, in turn, a plurality of radial channels (14) which connect the toroidal spacing (11), at the greater section portion (11b) thereof, with the outside of the casing (2).

5. A transducer device (1) according to claim 4, wherein the radial channels (14) of the connection plate (5) have a profile flared towards the outside, in continuation of the flaring of the section of the toroidal spacing (11).

6. A transducer device (1) according to claim 4 or 5, wherein the radial channels (14) of the connection plate (5) are arranged obliquely and are substantially aligned with the outlets of the radial channels (13) of the countermass element (9) in the toroidal spacing (11).

7. A sonication apparatus comprising one or more transducer devices (1) as outlined in any one of claims from 1 to 6.

## Patentansprüche

1. Ultraschall-Wandlervorrichtung (1), umfassend ein Gehäuse (2), welches eine piezoelektrische Vorrichtung (3) umschließt, wobei die piezoelektrische Vorrichtung (3) einen inneren Ventilationspfad (13, 11, 14) für den Durchgang von Kühlluft von der Außenseite der piezoelektrischen Vorrichtung (3) zu der Außenseite des Gehäuses (2) umfasst, wobei die Vorrichtung (1) umfasst: eine Verbindungsplatte (5), welche einen Körper (105) umfasst, welcher sich innerhalb des Gehäuses (2) erstreckt und welcher eine Masse aufweist, welche in Übereinstimmung mit dem Masse-Feder-Dämpfer-Modell berechnet ist, eine Nabe (6), welche sich zentral von der Verbindungsplatte (5) erstreckt und außerhalb des Gehäuses (2) vorsteht, wobei die Nabe (6) für die Verbindung mit einem Betriebselement eingerichtet ist, beispielsweise einer Sonotrode, wobei die Verbindungsplatte (5) einen Sitz (7') umfasst, welcher wenigstens einen Gewindeabschnitt umfasst, und wobei die piezoelektrische Vorrichtung (3) umfasst:
- ein piezoelektrisches Element (8), welches zwischen dem Körper (105) der Platte (5) und einem Gegenmassen-Element (9) eingefügt ist, wobei das piezoelektrische Element (8) und das Gegenmassen-Element (9) jeweilige zentrale Löcher umfassen, welche mit dem Sitz (7') der Verbindungsplatte (5) ausgerichtet sind,
- ein Befestigungselement (10), welches in die ausgerichteten Löcher des Gegenmassen-Elements (9) und des piezoelektrischen Elements (8) eingesetzt ist und in dem Sitz (7') der Verbindungsplatte durch Schrauben befestigt ist, und
- eine Platte (12), welche aus einem metallischen Material hergestellt ist, welche zwischen dem piezoelektrischen Element (8) und dem Gegenmassen-Element (9) platziert ist, um so ein Kontaktelement zu bilden, welches mit einer elektrischen Leistungsquelle verbindbar ist, wobei das Befestigungselement (10) einen Kopf (10a), einen zentralen Abschnitt (10b) und einen Endabschnitt (10c) umfasst, wobei:
- der Kopf (1 0a) einen Durchmesser größer als derjenige des zentralen Abschnitts (10b) aufweist;
- der Endabschnitt (10c) mit einem Gewinde versehen und derart bemessen ist, dass er mit dem Sitz (7') der Verbindungsplatte (5) durch Verschrauben koppelt;
- der zentrale Abschnitt (10b) eine Kegelstumpf-Form aufweist, welche in Richtung des Endabschnitts (10c) zulaufend ist, und einen Durchmesser aufweist, welcher immer kleiner bezüglich des Innendurchmessers der Löcher ist, welche durch das Gegenmassen-Element (9), das piezoelektrische Element (8) und einen erster Teil des Körpers (105) der Verbindungsplatte (5) hindurchtreten, um so einen ringförmigen Raum (11) zwischen dem Befestigungselement (10) und den Innenwänden der Gegenmasse (9) und der piezoelektrischen Elemente (8) zu bilden, wobei der ringförmige Raum (11) von dem Gegenmassen-Element (9) zu dem Körper (105) der Verbindungsplatte (5) verlaufend aufgebördelt ist und einen Querschnitt mit einem kleineren Querschnitt (11a) an dem Gegenmassen-Element (9) und einen Querschnitt mit einem größeren Querschnitt (11b) an dem Körper (105) umfasst.

2. Wandlervorrichtung (1) nach Anspruch 1, wobei zwischen der piezoelektrischen Vorrichtung (3) und den Innenwänden des Gehäuses (2) eine Kammer (102) gebildet ist, welche derart eingerichtet ist, dass sie den Durchgang eines KühlluftStroms entlang der Außenwände der piezoelektrischen Vorrichtung (3) erlaubt.

3. Wandlervorrichtung (1) nach Anspruch 2, wobei das Gehäuse (2) ein erstes Ende (2a) und ein zweites Ende (2b) umfasst, wobei die Vorrichtung (1) in der Nähe des ersten Endes (2a) ein Loch (104) umfasst, welches mit einer Kühlluft-Quelle verbindbar ist, und in der Nähe des zweiten Endes (2b) ein oder mehrere Löcher (202), welche die Kammer (102) in Kommunikation mit dem Äußeren des Gehäuses (2) versetzen.

4. Wandlervorrichtung (1) nach Anspruch 1, wobei:
- das Gegenmassen-Element (9) eine Mehrzahl von radialen Kanälen (13) umfasst, welche die Kammer (102) zwischen dem Gehäuse (2) und der piezoelektrischen Vorrichtung (3) in Strömungskommunikation mit dem ringförmigen Raum (11) an dem kleineren Querschnittsabschnitt (11a) des letzteren versetzen, und
- die Verbindungsplatte (5) wiederum eine Mehrzahl von radialen Kanälen (14) umfasst, welche den ringförmigen Raum (11) an dem größeren Querschnittsabschnitt (11b) davon mit der Außenseite des Gehäuses (2) verbinden.

5. Wandlervorrichtung (1) nach Anspruch 4, wobei die radialen Kanäle (14) der Verbindungsplatte (5) ein Profil aufweisen, welches in Richtung der Außenseite in Verlängerung der Aufbördelung des Abschnitts des ringförmigen Raums (11) aufgebördelt ist.

6. Wandlervorrichtung (1) nach Anspruch 4 oder 5, wobei die radialen Kanäle (14) der Verbindungsplatte (5) schräg angeordnet sind und im Wesentlichen mit den Auslassen der radialen Kanäle (13) des Gegenmassen-Elements (9) in dem ringförmigen Raum (11) ausgerichtet sind.

7. Ultraschall-Behandlungsvorrichtung, umfassend eine oder mehrere Wandlervorrichtungen (1) wie in einem der Ansprüche 1 bis 6 ausgeführt.

## Revendications

1. Dispositif transducteur ultrasonique (1) comprenant un boîtier (2) qui renferme un dispositif piézoélectrique (3), dans lequel le dispositif piézoélectrique (3) comprend un chemin de ventilation intérieur (13, 11, 14) pour le passage d'air de refroidissement depuis l'extérieur du dispositif piézoélectrique (3) jusqu'à l'extérieur du boîtier (2), dans lequel
le dispositif (1) comprend une plaque de raccordement (5) comprenant un corps (105) qui s'étend à l'intérieur du boîtier (2) et qui a une masse calculée conformément au modèle masse-ressort-amortisseur, un moyeu (6) s'étendant au centre à partir de la plaque de raccordement (5) et faisant saillie à l'extérieur du boîtier (2), le moyeu (6) étant configuré pour le raccordement à un organe de fonctionnement, par exemple une sonotrode, dans lequel la plaque de raccordement (5) comprend un siège (7') comprenant au moins une portion filetée et dans lequel le dispositif piézoélectrique (3) comprend :
- un élément piézoélectrique (8) enserré entre le corps (105) de la plaque (5) et un élément de contremasse (9), dans lequel l'élément piézoélectrique (8) et l'élément de contremasse (9) comprennent des trous centraux respectifs alignés avec le siège (7') de la plaque de raccordement (5),
- un élément de fixation (10) inséré dans les trous alignés de l'élément de contremasse (9) et de l'élément piézoélectrique (8) et fixé dans le siège (7') de la plaque de raccordement (5) par vissage, et
- une plaque (12) réalisée en matériau métallique, placée entre l'élément piézoélectrique (8) et l'élément de contremasse (9) de façon à former un élément de contact pouvant être raccordé à une source de puissance électrique, l'élément de fixation (10) comprenant une tête (10a), une portion centrale (10b) et une portion d'extrémité (10c), dans lequel :
- la tête (10a) a un diamètre supérieur à celui de la portion centrale (10b) ;
- la portion d'extrémité (10c) est filetée et est dimensionnée de façon à se coupler au siège (7') de la plaque de raccordement (5) par vissage ;
- la portion centrale (10b) a une forme tronconique, effilée vers la portion d'extrémité (10c), et a un diamètre toujours plus petit par rapport au diamètre intérieur des trous qui traversent l'élément de contremasse (9), l'élément piézoélectrique (8) et une première partie du corps (105) de la plaque de raccordement (5), de façon à former un espacement toroïdal (11) entre l'élément de fixation (10) et les parois intérieures des éléments de contremasse (9) et piézoélectrique (8), dans lequel ledit espacement toroïdal (11) est évasé en passant de l'élément de contremasse (9) au corps (105) de la plaque de raccordement (5) et comprend une partie de section plus petite (11a) au niveau de l'élément de contremasse (9) et une partie de section plus grande (11b) au niveau du corps (105).

2. Dispositif transducteur (1) selon la revendication 1, dans lequel entre le dispositif piézoélectrique (3) et les parois intérieures du boîtier (2), une chambre (102) est formée configurée de façon à permettre le passage d'un écoulement d'air de refroidissement le long des parois extérieures du dispositif piézoélectrique (3).

3. Dispositif transducteur (1) selon la revendication 2, dans lequel le boîtier (2) comprend une première extrémité (2a) et une seconde extrémité (2b), dans lequel le dispositif (1) comprend, près de la première extrémité (2a), un trou (104) pouvant être raccordé à une source d'air de refroidissement et, près de la seconde extrémité (2b), un ou plusieurs trous (202) qui mettent la chambre (102) en communication avec l'extérieur du boîtier (2).

4. Dispositif transducteur (1) selon la revendication 1, dans lequel :
- l'élément de contremasse (9) comprend une pluralité de canaux radiaux (13) qui mettent la chambre (102), entre le boîtier (2) et le dispositif piézoélectrique (3), en communication d'écoulement avec l'espacement toroïdal (11), au niveau de la partie de section plus petite (11a) de ce dernier, et
- la plaque de raccordement (5) comprend, quant à elle, une pluralité de canaux radiaux (14) qui raccordent l'espacement toroïdal (11), au niveau de sa partie de section plus grande (11b), avec l'extérieur du boîtier (2).

5. Dispositif transducteur (1) selon la revendication 4, dans lequel les canaux radiaux (14) de la plaque de raccordement (5) ont un profil évasé vers l'extérieur, dans le prolongement de l'évasement de la section de l'espacement toroïdal (11).

6. Dispositif transducteur (1) selon la revendication 4 ou 5, dans lequel les canaux radiaux (14) de la plaque de raccordement (5) sont agencés à l'oblique et sont sensiblement alignés avec les sorties des canaux radiaux (13) de l'élément de contremasse (9) dans l'espacement toroïdal (11).

7. Appareil de sonication comprenant un ou plusieurs dispositifs transducteurs (1) tel qu'exposés dans l'une quelconque des revendications 1 à 6.
